(19) **Europäisches Patentamt / European Patent Office / Office européen des brevets**

(11) **EP 4 067 943 B1**

(12) # EUROPEAN PATENT SPECIFICATION

(45) Date of publication and mention
of the grant of the patent:
**03.09.2025 Bulletin 2025/36**

(51) International Patent Classification (IPC):
**G01V 1/36** *(2006.01)*    **G01V 1/28** *(2006.01)*

(21) Application number: **21305390.3**

(52) Cooperative Patent Classification (CPC):
**G01V 1/364; G01V 1/288;** G01V 2210/123;
G01V 2210/3246; G01V 2210/34

(22) Date of filing: **29.03.2021**

(54) **PREDICTION METHOD OF WAVE-INDUCED BACKGROUND SEISMIC NOISE**

VORHERSAGEVERFAHREN VON WELLENINDUZIERTEM SEISMISCHEM HINTERGRUNDRAUSCHEN

PROCÉDÉ DE PRÉDICTION DE BRUIT DE FOND SISMIQUE INDUIT PAR LES ONDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022 Bulletin 2022/40**

(73) Proprietors:
• **Institut Optique Théorique Appliquée**
**91127 Palaiseau Cedex (FR)**
• **Centre national de la recherche scientifique**
**75016 Paris (FR)**
• **UNIVERSITE DE BORDEAUX**
**33000 Bordeaux (FR)**

(72) Inventors:
• **BERTOLDI, Andrea**
**33400 Talence (FR)**
• **GAFFET, Stéphane**
**84400 Rustrel (FR)**

(74) Representative: **Atout PI Laplace**
**Immeuble Up On**
**25 Boulevard Romain Rolland**
**CS 40072**
**75685 Paris Cedex 14 (FR)**

(56) References cited:
• **ARDHUIN FABRICE ET AL: "Ocean wave sources of seismic noise", JOURNAL OF GEOPHYSICAL RESEARCH, vol. 116, no. C9, 1 January 2011 (2011-01-01), US, XP055836170, ISSN: 0148-0227, Retrieved from the Internet <URL:https://citeseerx.ist.psu.edu/viewdoc/download?doi=10.1.1.401.8433&rep=rep1&type=pdf> [retrieved on 20210831], DOI: 10.1029/2011JC006952**
• **HILLERS G. ET AL: "Global oceanic microseism sources as seen by seismic arrays and predicted by wave action models", G3: GEOCHEMISTRY, GEOPHYSICS, GEOSYSTEMS, vol. 13, no. 1, 1 January 2012 (2012-01-01), US, pages 1 - 19, XP055836189, ISSN: 1525-2027, Retrieved from the Internet <URL:https://agupubs.onlinelibrary.wiley.com/doi/epdf/10.1029/2011GC003875> [retrieved on 20210831], DOI: 10.1029/2011GC003875**
• **MOSCHELLA SALVATORE ET AL: "Insights Into Microseism Sources by Array and Machine Learning Techniques: Ionian and Tyrrhenian Sea Case of Study", FRONTIERS IN EARTH SCIENCE, vol. 8, 5 May 2020 (2020-05-05), pages 1 - 18, XP055836341, Retrieved from the Internet <URL:https://www.frontiersin.org/articles/10.3389/feart.2020.00114/full> [retrieved on 20210831], DOI: 10.3389/feart.2020.00114**

EP 4 067 943 B1

**(Cont. next page)**

• **MA BARRY B ET AL: "Prediction of underwater sound levels from rain and wind", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 117, no. 6, 1 June 2005 (2005-06-01), pages 3555 - 3565, XP012073001, ISSN: 0001-4966, DOI: 10.1121/1.1910283**

**Description**

**BACKGROUND**

FIELD

The invention relates to the study of the wave-induced background seismic noise, more particularly to the prediction of such noise at a point of interest located on the ground.

RELATED ART

Several very sensitive scientific experiments and technological / industrial processes are limited in their ultimate performance by the background seismic noise.

Those experiments are for example the detection of gravitational waves, atomic interferometry or the characterization of intrinsic noise of sensors such as gyroscopes and accelerometers.

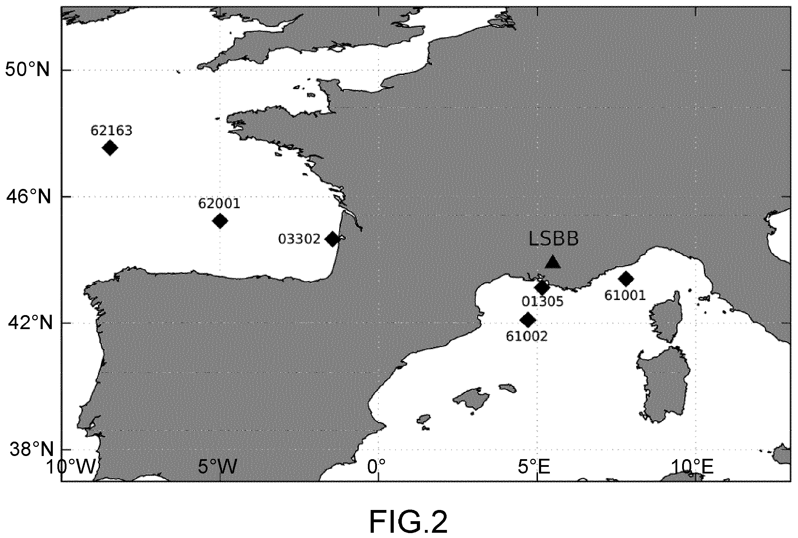

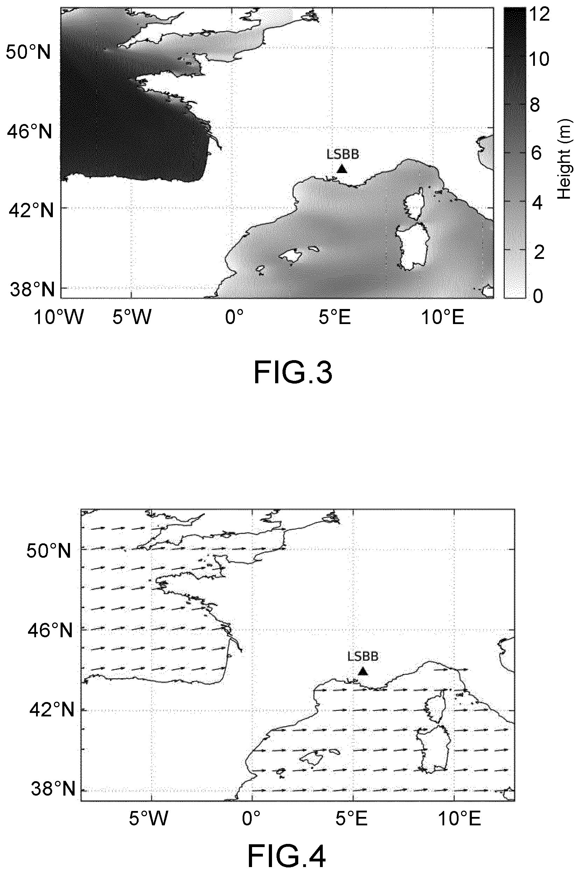

The seismic noise refers to the mechanical vibrations of the ground It is measured with seismometers, gyroscopes and strainmeters. The seismic background noise is described in detail in the open file report "Observation and modeling of seismic background noise" Jon Peterson 1993 (open file report 93-322). Considering the translational components, it can be measured in terms of the acceleration ($m/s^2$) or velocity (m/s) of the particle motion at one position, and along the three cartesian coordinates x-y-z. In the case of rotational components, it is measured in terms of rotation (rad/s) of the particle motion at one position, again along the three cartesian coordinates x-y-z. To highlight its spectral content it is typically represented with its power spectral density. The latter refers to the spectral energy distribution normalized to the unit time, and is expressed for the acceleration in $m^2/s^4/Hz$, for the velocity in $m^2/s^2/Hz$ (see figures 2 and 3 of Peterson) and for the rotation in $rad^2/s^2/Hz$.

The background seismic noise, called SN, concerns the low frequency part of the background seismic noise, typically comprised between 0.001 Hz and 20 Hz.

The SN at a place of interest on the ground is mainly determined by the ocean waves even far located with respect to the place. This relation, suggested more than 100 years ago, has been thoroughly characterized, for example by Fabrice Ardhuin et al. in the publication: "From seismic noise to ocean wave parameters: general methods and validation", Journal of Geophysical research vol 117, C05002 (2012). The goal of the author is to derive ocean wave parameters from seismic noise measurements, for example to reconstruct past waves climates based on seismic records (abstract).

The publication of Ardhuin et al "Ocean wave sources of seismic noise », Journal of Geophysical research, vol.116, n°C9 (January 2011) discloses a numerical model, which produces the seismic noise spectra expected on ground as a function of satellite-based sea state observations and a detailed knowledge of the winds on the oceans, presence of icebergs and coasts generating reflections, combined with a numerical wave model implementing excitation theory.

The publication of Hillers et al "Global oceanic microseism sources by array and machine learning techniques: Ionian and Tyrrhenian sea case of study", Frontiers in Earth science, vol. 8, May 2020, discloses a protocol to determine the oceanic microseism source patterns, i.e. the ocean areas mainly responsible of the seismic noise observed at three far located stations on ground. This objective is achieved by comparing so-called "observed locations" and "modeled or predicted locations".

There is presently a need for the above cited scientific experiments to better take into account the perturbation due to background seismic noise SN, and the goal of the invention is to be able to make forecasts of seismic wave-induced SN to optimize the planning of sensitive experiments in periods of low SN, or to improve the experimental sensitivity thanks to adaptive algorithms for the identification of target signals in the anticipated SN .

**SUMMARY of THE INVENTION**

In a first aspect, the present invention provides a seismic noise prediction method at a point of interest as defined in independent claim 1.

In a second aspect, the present invention provides a seismic noise prediction method at a point of interest as defined in independent claim 4.

Further advantageous aspects of the present invention are defined in the dependent claims.

**BRIEF DESCRIPTION OF THE DRAWINGS**

Embodiments of the present invention, and further objectives of advantages thereof, are described in details below with reference to the attached figures, wherein :

Figure 1 illustrates the seismic noise prediction method according to the invention.

Figure 2 illustrates the chosen place of interest for the example, LSBB (Laboratoire Souterrain à Bas Bruit) in Rustrel (France), and the location of the six selected buoys: 01305 Marseille le Planier; 61001 Nice; 61002 Golf du lion; 03302 Cap Ferret; 62001 Gascogne Ouest Arcachon; 62163 Bretagne.

Figure 3 illustrates an example of the forecasts for the wave height for the western Europe Atlantic region and the western Mediterranean Sea.

Figure 4 illustrates an example of the forecast for the wave direction for the western Europe Atlantic region and the western Mediterranean Sea.

Figure 5 compares, at the location of buoy 01305, wave height predicted over 15 days from 24/12/2020 to 7/01/2021 in grey (curve 50) and wave height as real data recorded daily at the buoy 01305 (in black, curve 51) from 20/12/2020 to 7/01/2021.

Figure 6 shows at point A: i) the forecast of the seismic noise (dotted curves FA) at LSBB, representing the spectral power density of the seismic noise PSDz as a function of the frequency of seismic noise (in Hz), on the spectral window Δf. ii) the *a posteriori* measured seismic noise spectra at LSBB at the same point A (solid curve MA).

Figure 7 shows at point B: i) the forecast of the seismic noise (dotted curves FB) at LSBB, representing the spectral power density of the seismic noise PSDz as a function of the frequency of seismic noise (in Hz), on the spectral window Δf. ii) the *a posteriori* measured seismic noise spectra at LSBB at the same point B (solid curve MB).

Figure 8A compares evolution over time of seismic noise at POI and the ocean parameter wave height (in meter). On the left side A, in grey is plotted the power at 1 Hz taken from the hourly noise spectra at LSBB over the 4 months period May-August 2020 (vertical axis on the left side) and with black dots is plotted the waves' height (vertical axis on the right side) measured at three different buoys (01305, 03302, 61001, 61002, 62001, 62163). On the right side B the two previous quantities are plotted as x and y coordinates.

Figure 8B is similar to figure 8A for three other buoys (61002, 62001, 62163).

Figure 9A shows in grey code the positive correlation between the seismic noise at LSBB and different ocean weather parameters measured for 7 different buoys: the 6 used later for the prediction (01305, 03302, 61001, 61002, 62001, 62163) and a 7th, the 63115 "Magnus AWS" buoy, located in the Norwegian Sea at the GPS coordinates 61.600 N 1.300 E. The correlation is determined in spectral bins from 0.01 Hz to 10 Hz.

Figure 9B shows in grey code the negative correlation between the seismic noise at LSBB and different ocean weather parameters measured for 7 different buoys: the 6 used later for the prediction (01305, 03302, 61001, 61002, 62001, 62163) and a 7th, the 63115 "Magnus AWS" buoy, located in the Norwegian Sea at the GPS coordinates 61.600 N 1.300 E. The correlation is determined in spectral bins from 0.01 Hz to 10 Hz.

## DETAILED DESCRIPTION OF THE INVENTION

The basic idea of the prediction method according to the invention is to use a model which couples values of predetermined ocean parameter(s) taken at predetermined ocean place(s) with background seismic noise SN, taken at the place of interest. Seismic noise predictions are obtained by injecting ocean parameters forecast into the model.

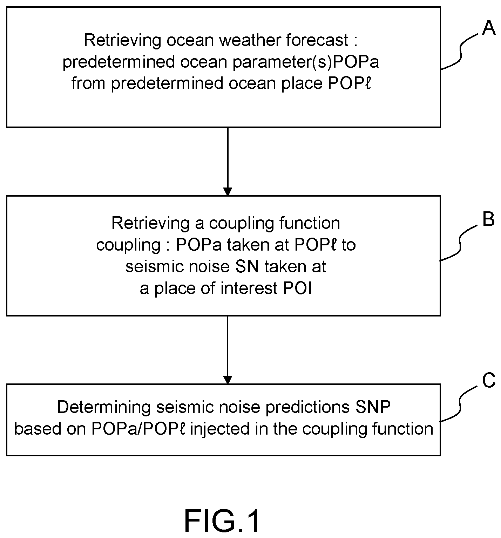

The seismic noise prediction method 100 at a point of interest POI located on the ground according to the invention is described on figure 1.

In a first step **A** ocean weather forecast is retrieved from one or a plurality of predetermined ocean places called POPI. The ocean weather forecast covers values of one or a plurality of predetermined ocean parameters POPa.

In a step **B** a coupling function CF is retrieved, this function coupling the predetermined ocean parameter(s) POPa taken at said predetermined ocean place(s) POPI with the background seismic noise SN, that we will call seismic noise for simplicity, taken at the place of interest POI. The coupling function is defined on at least a spectral window Δf of the seismic noise included in the range [0,001 Hz; 20 Hz].

On a step **C** seismic noise predictions SNP are determined based on the ocean weather forecast injected in said coupling function.

For a given place of interest POI, the predetermined ocean parameters, the predetermined ocean places and the coupling function have been determined in a preliminary step that can be performed once for all or regularly updated.

An example of the implementation of the prediction method 100 according to the invention and of the preliminary step will be described below.

The chosen place of interest is the location of the LSBB (Laboratoire Souterrain à Bas Bruit) in Rustrel (France) illustrated in figure 2.

The predetermined ocean places POPI are the location of six buoys also illustrated on figure 2: 01305 Marseille le Planier; 61001 Nice; 61002 Golf du lion; 03302 Cap Ferret; 62001 Gascogne Ouest Arcachon; 62163 Bretagne. Three are located in the Mediterranean sea and three are located in the Atlantic ocean.

In this example the predetermined ocean parameters POPa have been selected among a plurality of ocean parameters OPa for which forecasts are available. Typically the ocean parameters OPa are chosen among: wave height (maximum and/or significant), wave period T, wave direction dir, wave spread, wind force, wind direction, air temperature, air pressure, water pressure. The availability of the forecast for the above listed ocean parameters depends on the forecast model and the place in the ocean.

Weather forecast models are presently available that can predict the wave features up to 16 days. Two of these models are:

- the WAM (WAve Model) from ECMWF (European Centre for Medium-Range Weather Forecasts) (resolution of 1, 5, or 54 km at different scales, time depths till 96 hours in high definition, and up to 16 days with increasing uncertainty);
- the WW3 (wave watch III) from NOAA (National Oceanic and Atmospheric Administration) and NCEP (National Centers for Environmental Prediction) (resolution of 54 km and time depth up to 8 days).

These models predict at different sites offshore and on the coasts the wave features like height, period and direction.

The predetermined ocean parameters POPa in this example are :

POPa : wave height WH and wave period T for the 6 places,
wave direction dir for ocean places 01305 and 01302.

In the example the predictions of the ocean parameters POPa are obtained by interpolating at POPI the 16 days WAM forecasts on a 54 km mesh.

In figure 3 is shown an example of the forecast for the wave height and in figure 4 the forecast for the wave direction for the western Europe Atlantic region and the western Mediterranean sea (WAM with a 54 km mesh).

The ocean weather forecasts cover the entire world or more specific areas, and are available as data-files with all the predicted parameters on the adopted longitude/latitude mesh. An example of WAM prediction (54 km mesh) for the whole world generated on the 24/12/2020 for the 28/12/2020 at 12:00 is given on table I.

The table contains the following columns:

- "LON": longitude, from 0.000º to 359.500º, with a step of 0.5º
- "LAT": latitude, from -80.000º to 80.000º, with a step of 0.5º
- "SWE_H": Swell Wave Height in meters
- "MEANSDIR": Mean Swell Direction in degrees, following the meteorological convention
- "MEANSFR": Mean Swell Frequency in Hz
- "WSEA_H": Wind Sea Wave Height in meters
- "WSEAD": Wind Sea Direction in degrees
- "WSEA_FR": Wind Sea Frequency in Hz

and distinguishes between the "swell", gravity waves on the water surface originated by distant weather systems and with a relatively long wavelength, and the "wind sea wave", surface waves generated by the local wind blowing on the water basin on a distance called "fetch". Generally the swell carries more energy, and we adopt its parameters for the present example of forecast: we used the variable « SWE_H », « MEANSDIR » and « MEANSFR ».

Table I: Example of a forecast data-file for the whole world generated on the 24/12/2020 for the 28/12/2020 at 12:00 (first few lines only).

| LON | LAT | SWE_H | MEANSDIR | MEANSFR | WSEA-H | WSEAD | WSEA_FR |
|---|---|---|---|---|---|---|---|
| -72.500 | -69.500 | 0.18 | 355.884 | 0.289 | 0.000 | 170.301 | 1.000 |
| -72.000 | -69.000 | 0.15 | 15.851 | 0.266 | 0.317 | 51.520 | 0.354 |
| -67.500 | -69.000 | 0.01 | 23.550 | 0.364 | 0.000 | 184.235 | 1.000 |
| -67.000 | -69.000 | 0.01 | 322.432 | 0.338 | 0.000 | 177.129 | 1.000 |
| -106.500 | -67.500 | 0.60 | 330.843 | 0.090 | 0.000 | 355.890 | 1.000 |
| -106.000 | -67.500 | 0.75 | 323.147 | 0.090 | 0.000 | 11.883 | 1.000 |
| -105.500 | -67.500 | 0.85 | 319.123 | 0.090 | 0.000 | 23.742 | 1.000 |
| -105.000 | -67.500 | 0.92 | 316.122 | 0.091 | 0.000 | 30.188 | 1.000 |
| -104.500 | -67.500 | 0.95 | 313.310 | 0.090 | 0.000 | 37.066 | 1.000 |
| -102.500 | -67.500 | 0.66 | 344.061 | 0.086 | 0.000 | 36.908 | 1.000 |
| -102.000 | -67.500 | 0.79 | 333.937 | 0.085 | 0.000 | 62.922 | 1.000 |
| -101.500 | -67.500 | 0.85 | 330.116 | 0.085 | 0.000 | 117.945 | 1.000 |
| -101.000 | -67.500 | 0.89 | 328.323 | 0.0584 | 0.000 | 146.097 | 1.000 |
| -100.500 | -67.500 | 0.91 | 327.438 | 0.083 | 0.000 | 22.480 | 1.000 |

(continued)

| LON | LAT | SWE_H | MEANSDIR | MEANSFR | WSEA-H | WSEAD | WSEA_FR |
|---|---|---|---|---|---|---|---|
| -100.000 | -67.500 | 0.92 | 326.936 | 0.083 | 0.000 | 25.018 | 1.000 |
| -99.500 | -67.500 | 0.91 | 326.429 | 0.082 | 0.000 | 18.876 | 1.000 |
| -99.000 | -67.500 | 0.91 | 325.529 | 0.081 | 0.000 | 335.089 | 1.000 |
| ... | ... | ... | ... | ... | ... | ... | ... |
| ... | ... | ... | ... | ... | ... | ... | ... |

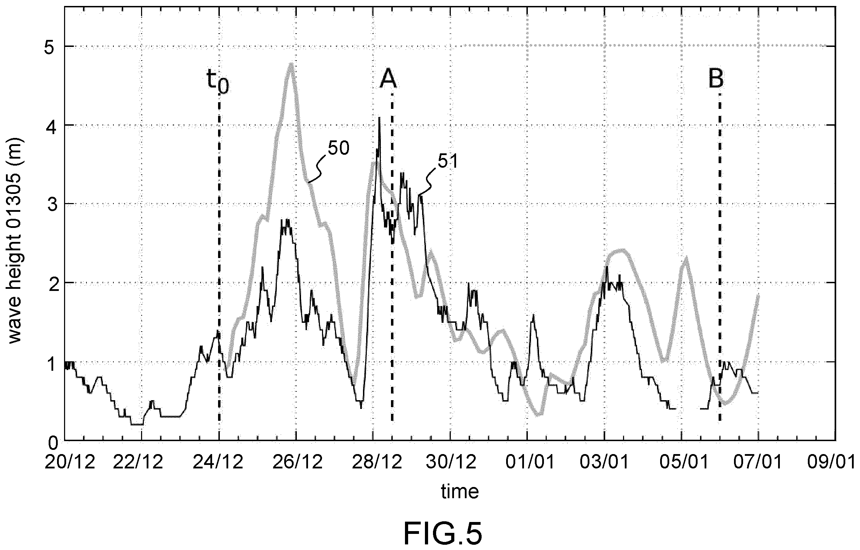

Figure 5 compares, at the location of buoy 01305, wave height predicted over 15 days from 24/12/2020 to 7/01/2021 in grey (curve 50) (obtained by interpolation of available forecasts at the location of the buoy 01305) and wave height as real data recorded daily at the buoy 01305 (in black, curve 51) from 20/12/2020 to 7/01/2021. A good overall agreement can be observed over the period of the prediction.

Two specific points, A December 28th 2020 at 12h00 and B January 6th 2021 at 6h00, that will be used later for seismic noise predictions, are highlighted with a dotted vertical line.

Using the forecast of the above listed POPa wave parameters (height and period T at the 6 buoys, and direction dir for buoys 01305 and 01302 ) and a predetermined coupling function FC (detailed later), predictions on the seismic noise spectrum are made at LSBB location on a spectral window $\Delta f$ of [0.01 Hz ; 10 Hz].

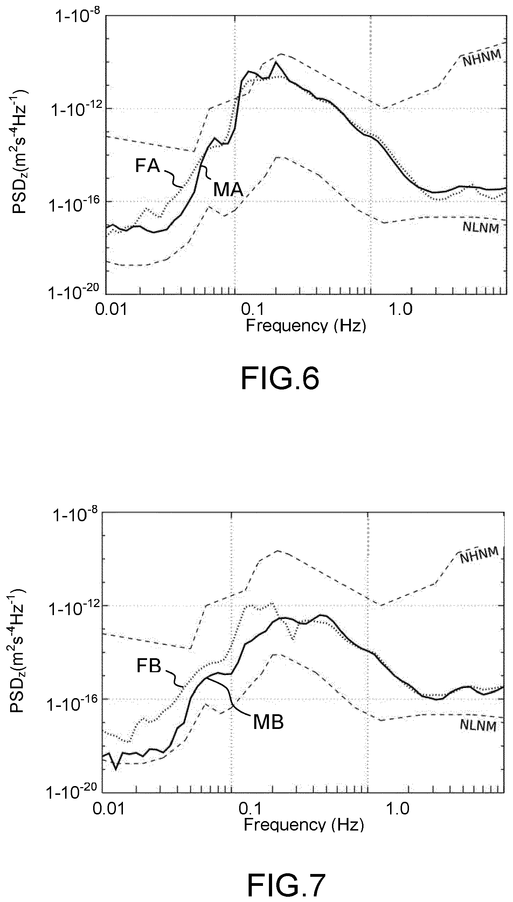

Figures 6 and 7 show the forecast of the seismic noise respectively for the points A and B (dotted curves FA and FB) at LSBB, representing the spectral power density of the seismic noise along the z axis PSDz (z corresponding to the vertical axis) as a function of the frequency of seismic noise (in Hz) on the spectral window $\Delta f$ of [0.01 Hz ; 10 Hz].

The seismic noise spectra measured *a posteriori* at LSBB at the same points A and B are also plotted in solid curves MA and MB. Curves MA and MB are determined from the measurement of acceleration data along the vertical direction taken with a Streckeisen STS-2 Broadband Sensor. Present and past data are available via the RESIF website (http://seismology.resif.fr/). One spectrum is produced with a separation of 30 minutes, and taking each the seismic data for one hour window and producing an FFT. A binning procedure is applied to each spectrum, in order to reduce its information to an array of 60 frequency bins between 0.01 Hz and 10 Hz, 20 per decade and in exponential progression using a growth factor equal to $\sqrt[20]{10}$ .

Curve NHNM means "new high-noise model" and curve NLNM means "new low-noise model", as defined in the Peterson publication (1993) "Observation and modeling of seismic background noise" pages 31 and 32. They correspond to an average low and average high background noise power registered in a seismic network on earth.

The comparison of FA vs MA shows an excellent agreement over the frequency decade [150 mHz;2.5 Hz] and a good agreement over an enlarged window [60 mHz;10 Hz]; the agreement is higher when the ocean weather forecast is consistent with the ocean weather effectively observed, which typically means for times close to t0. Point A characterizes a high seismic noise (see PSDz scale and corresponding high wave height).

The agreement FB vs MB shows an excellent overlap on the frequency window [500 mHz; 2.5 Hz], and a good one over the frequency widow [200 mHz;10 Hz]. The agreement is lower for frequency below 200 mHz; point B characterizes a lower seismic noise.

It can be seen that the result and interest of the method according to the invention is to make accurate seismic noise predictions at a given point of interest, those predictions being deduced from ocean weather forecast.

The prediction method according to the invention can then be repeated in continuous, by converting the wave forecasts every time as a new prediction is available (typically every few hours). In this way the invention provides a regularly updated forecasting tool for seismic noise at the specific location.

So the invention allows to know in advance the expected seismic noise background in a given location, typically with several days of advance (and with an uncertainty increasing with the forecast time depth), thanks to:

- the previous estimation of the coupling between ocean weather parameters with seismic noise
- the ocean weather forecast, based on different models based on the global forecast system.

The anticipated knowledge of the background seismicity of a given place has direct scientific and technological advantages:

- optimize the run-time of expensive experimental setups, concentrating their operation during periods of low background seismicity; this novel approach will determine the reduction of the costs associated to the experiment operation, and at the same time better overall performances thanks to the experiment being operated at optimal sensitivity. This is the case of gravimeters, both in their classical and quantum version, ultimately limited by the residual vibration noise of the reference plane used to measure the free fall of a probe;

- optimize the run-time of precise industrial processes, whose performance are limited by the seismic background. This is the case, e.g., of the realization and characterization of optical surfaces with the ultimate flatness;
- one outcome of such approach is the reduction and/or optimization of costs related to human resources; the operators of experimental and industrial setups will optimize their efforts in periods of low seismicity, when the processes run at their best performance, and will make a different use of the high seismicity periods (e.g. upgrade of the setup, analytical work, free time);
- to optimize the performances of scientific experiments run in continuous, as is the case of gravitational wave detection and the creation and distribution of the standard time scales, and where it is not possible to operate only during the quietest intervals, by adopting adaptive data analysis techniques for the identification of target signals or for the optimal operation in the anticipated noise background

Neither research experiments nor industrial activities schedule nowadays their run time in function of the foreseen background seismic activity, which to date is not forecast. The normal approach is to repeat the experimental/industrial activity, lowering the impact of the background seismic noise via statistical averaging where possible, or selecting *a posteriori* the best realizations otherwise.

The determination of the coupling function is performed in a preliminary step A0. A first phase consists in the collection of the data required to characterize the underlying dependence between the ocean weather (the "cause") and the seismic noise (the "effect") at the place of interest.

The expected delay between cause and effect is linked to the speed of propagation of seismic waves, of the order of a few km/s, and to the distance between the source of the seismic event and its measurement; in the following typical distances between the monitoring of the ocean weather and the site of interest of 100-1500 km is considered, i.e. a delay ranging from a fraction of a minute to a few minutes. Considering that the data of the ocean weather are typically available at an hourly rate (at best every half hour), this means the cause-effect propagation can be considered instantaneous. If the data of the ocean weather are available with a time resolution comparable or even better than the propagation time of seismic waves to the point of interest the specific contributions of separated sea regions could be untangled.

Two data-sets are required:
A first date-set is ocean weather data, and a sub step A01 of step A0 is retrieving ocean weather data OWD recorded at various places in the ocean OPI, and during a period of time PT, said ocean weather data comprising values of a plurality of ocean parameters OPa including the predetermined ocean parameters POPa.

In the example, OWD consists in information provided by 27 buoys placed in different the sea/oceanic water basin and available for example via the National Data Buoy Center of the NOAA, or via the Data Buoy Cooperation Panel from the World Meteorological Organization and Intergovernmental Oceanographic Commission of UNESCO. The buoys are both on the coasts and offshore, and each buoy has an identification number.

The 27 buoys are: Anglet (06402) - Atlantic Ocean • Saint-Jean-de-Luz (06403) - Atlantic Ocean • Cap Ferret (03302) - Atlantic Ocean • Oleron large (01704) - Atlantic Ocean • Ile d'Yeu Nord (08504) - Atlantic Ocean • Belle-Ile (05602) - Atlantic Ocean • Plateau du Four (04403) - Atlantic Ocean • Les Pierres Noires (02911) - Atlantic Ocean • Gascogne Ouest Arcachon (62001) - Atlantic Ocean • Bretagne (62163) - Atlantic Ocean • K1 Atlantique (62029) - Atlantic Ocean • Brehat - Iles-de-Brehat (02204) - English Channel • Cherbourg (exterieur) (05008) - English Channel • Paluel (07607) - English Channel • Manche Greenwich (62305) - English Channel • Channel Lightship (62103) - English Channel • Lomond AWS (62146) - North Sea • Magnus AWS (63115) - Norwegian Sea • Marseille (Le Planier) (01305) - Mediterranean sea • Nice (61001) - Mediterranean sea • Golfe du Lion (61002) - Mediterranean sea • Monaco (98000) - Mediterranean sea • Porquerolles (08302) - Mediterranean sea • Espiguette (03001) - Mediterranean sea • Sete (03404) - Mediterranean sea • Leucate (01101) - Mediterranean sea • Banyuls (06601) - Mediterranean sea.

The time interval TP is from February 2020 to February 2021. Scientific agencies like the NOAA freely provides the ocean weather data over the last 24 hours, and can provide historical databases. Data from buoys are typically available on an hourly rate.

The ocean weather data comprise parameters related to waves: wave height (significant and/or maximum, in meter); wave period (T in seconds, average and/or maximal); wave direction (dir in degrees); wave spread (in degrees). Ocean weather data can also comprise the water temperature (tempH20), wind force (in knots; 1 knot is equal to 1,852 km/h), wind direction (in degrees), air temperature (in degrees), air pressure (in Pascals)... Not all the quantities are available for all buoys and at all time.

Ocean weather data may also be collected from satellite survey.

A second data set is seismic noise at the place of interest and a sub step A02 of step A0 is retrieving seismic noise data SND recorded at the place of interest POI during the same period of time PT. Thus to run the preliminary step seismographic data must be available at the site of interest.

For the example of the LSBB several seismometers and accelerometers are present on site, and the present and past data are freely available via the RESIF website. Time intervals characterized by geological seismic events like earthquakes and volcano eruptions are removed from the seismic data stream, because then the acceleration signal is mainly due by causes other than ocean waves. To identify these time intervals, we use the list of earthquakes events registered worldwide (for example on the NOAA website) and we monitor the total power of the seismic spectra, looking for sudden changes.

Once the two set of data have been retrieved, the determination of the predetermined ocean places POPl, of the predetermined ocean parameters POPa and of the coupling function CF, is performed in a sub step A03, from a relationship between said ocean weather data and said seismic noise data.

According to a first embodiment substep A03 comprises :

- the identification of ocean parameter(s) or combinations of ocean parameter(s) leading to a correlation with seismic noise at the place of interest, the identified ocean parameter(s) corresponding to said predetermined ocean parameter(s), and
- the identification of the ocean place(s) where the correlation is relevant, said identified ocean places corresponding to said predetermined ocean place(s).

Then, CF is determined by solving a multivariable regression protocol, based on said correlations.

In this first embodiment a selection among a plurality of ocean parameters OPa and a selection among a plurality of ocean places are performed. The result of this selection are the so called predetermined ocean parameters POPa and predetermined ocean places POPl.

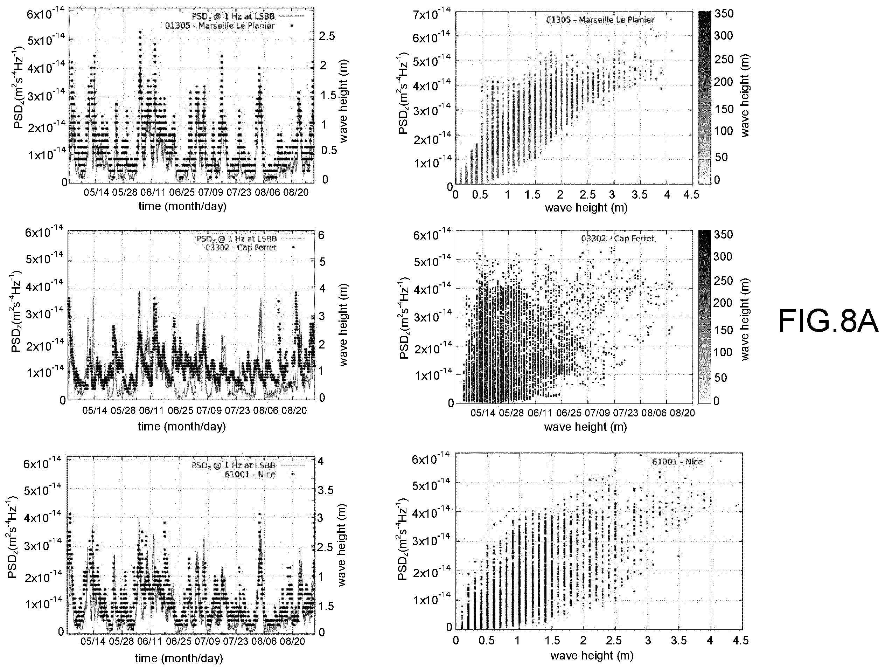

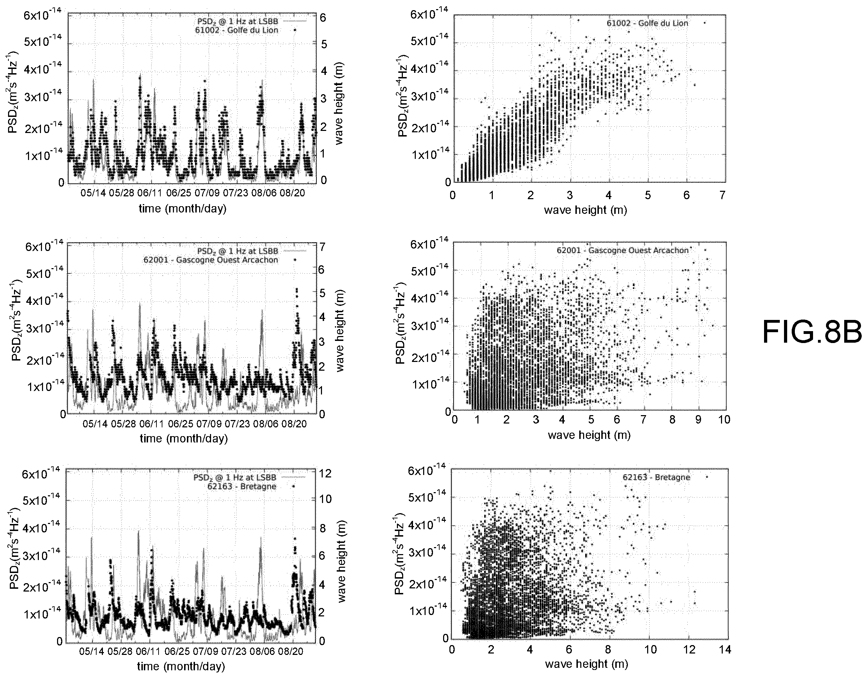

The selection can be operated by comparing evolution over time of seismic noise at POI and a chosen ocean parameter OPa, for each available ocean place. An example is given in figures 8A and 8B with the ocean parameter wave height (in meter).

On the left side A, in grey is plotted the power at 1 Hz taken from the hourly noise spectra at LSBB over the 4 months period May-August 2020 (vetical axis on the left side) and with black dots is plotted the waves' height (vertical axis on the right side) measured at 6 different buoys : figure 8A buoys 01305, 03302, 61001; figure 8B buoys 61002, 62001, 62163.

To highlight the correlation, the two previous quantities are plotted as x and y coordinates on the right side B. For the 01305 and 03302 buoys the color code shows the wave direction. A linear correlation is evident to the eye for the Mediterranean buoys 01305, 61001 and 61002, less for the Atlantic ones.

In a first approach the selection is realized by calculating a correlation factor such as the Pearson Correlation. This first approach of the first embodiment is applied in the example.

The Pearson correlation is the correlation $\rho_{Xi,Yj}$ between the time series for each quantity Xi (ocean parameter) measured at the buoys of interest and the seismic power Yj in the j-th frequency bin:

$$\rho_{Xi,Yj} \equiv \mathrm{corr}(Xi, Yj) = \mathrm{cov}(Xi, Yj) \,/\, \sigma_{Xi}\sigma_{Yj} \qquad (1)$$

with "cov" covariance and $\sigma$ standard deviation.

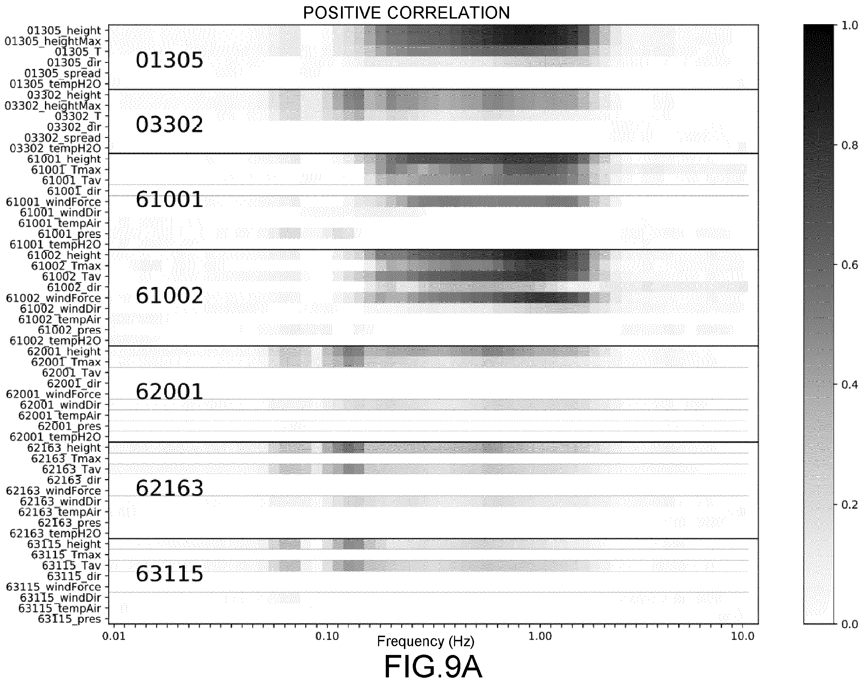

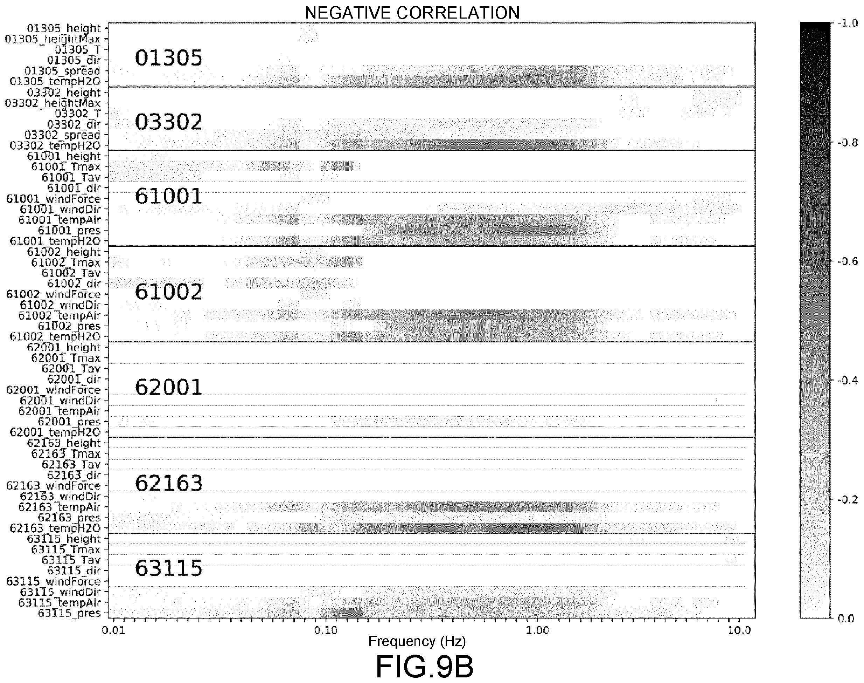

Figures 9A and 9B show in grey code the Pearson correlation between the seismic noise at LSBB and different ocean weather parameters measured for 7 buoys: the 6 used later (selected) for the prediction (01305, 03302, 61001, 61002, 62001, 62163) and a 7th, the 63115 "Magnus AWS" buoy, located in the Norwegian Sea at the GPS coordinates 61.600 N 1.300 E. The correlation is determined in spectral bins from 0.01 Hz to 10 Hz.

Figure 9A shows the positive correlation (factor between 0 and +1), and Figure 9B shows the negative one (between 0 and -1). Note that for each buoy the correlation is calculated for all the ocean parameters available. These parameters may be different from one buoy to another, and not all the buoy ocean parameters may be available in the chosen forecast model. For example water temperature (tempH20) is not a parameter available in the forecasts accessible to us. Therefore and independently of its level of correlation, this parameter cannot be retained for the implementation of the method. The closer the factor is to one in absolute value the higher is its value as a prediction parameter .

It can be seen on figures 9A and 9B that the best correlation is obtained for the 3 buoys in the Mediterranean sea and for the ocean parameters: wave height, wav height max, wave period T, or Tmax, or Taverage, wave direction dir (for some buoys), wind force (which is related to wave height). A lower correlation exists also for the 3 Atlantic ocean buoys, and even buoy 63115, located in the Norwegian sea, shows a certain degree of correlation.

It can also be seen that the best correlation is concentrated on the spectral window [0,1 Hz - 3Hz].

Other features can be highlighted:

the higher correlation is obtained with the waves' height, wind force (related to wave height) and the waves' period, a lower correlation for wave direction, temperature of the air and water, air pressure;
Wave height, period, direction, and wind force have a positive correlation with the seismic noise power, the temperature of the air and water a negative correlation; the wind direction and even more the air pressure show frequency intervals with opposite correlation;

Mediterranean weather shows a much higher correlation than the Atlantic weather, which is expected given the much shorter distance of the LSBB from the Mediterranean coast than the Atlantic one.

Preferentially the predetermined ocean place(s) are situated in the water basins nearby the point of interest.

Each specific site requires a preliminary selection to determine which restricted set of buoys should be considered to later realize the forecast. For this choice the correlation matrix previously calculated can be used (see figures 9A and 9B), to select the buoys presenting the highest degree of correlation with the seismic noise at LSBB.

So based on a visual observation of the correlation matrix, or by considering a set of thresholds, the predetermined parameters PDPa and the predetermined ocean places POPI are selected. In the example the 6 buoys 01305, 03302, 61001, 61002, 62001 and 62163 are selected, with ocean parameter wave height and wave period.

The inter-dependence between the ocean weather variables and the seismic noise at the place of interest is obviously more complex than a linear one: it is easy to see that waves with the same height but different direction or spread will have a different effect in terms of seismic energy transmitted at the place of interest.

We describe here the simplest model based on multiple linear regression. For simplicity we consider now a specific frequency bin, and the same procedure is then repeated on all the frequency bins. The vertical component of the seismic power spectral density $Y_i$ measured in the bin of interest is repeated for $i = 1,...n$ successive observations (in our case it consists in a one hour integrated measurement repeated every half an hour), and it is considered as a variable that depends linearly on n sea weather variables:

$$Y_i = \beta 0 + \beta 1 X_{i1} + \beta 2 X_{i2} + ... + \beta n X_{in} + \varepsilon i , \qquad (2)$$

where $X_{ij}$ is the i-th observation of the j-th independent variable,
$\beta j$ are the parameters to be determined by the regression algorithm, and
$\varepsilon i$ is the i-th error considered to be normally distributed.

The linear regression algorithm determines the best set of $\beta j$ parameters that minimizes the RMS difference between the predicted seismic signal and the measured one over a large set of historic data; this operation constitutes the "training" of the algorithm. The set of $\beta j$ parameters can then be used to transform sea weather forecasts into seismic noise forecasts, constituting the coupling function FC.

The entire process can be applied to the other components of the seismic motion, in order to observe polarization features of the wave-induced background seismic noise and of its prediction.

In a second approach the selection of the most significant combinations of ocean weather variables to model the seismic noise at the place of interest, constituting independent variables, are determined by PCA (Principal Component Analysis).

More generally several mathematical tools can be exploited to model this multi-variable regression problem.

In a second embodiment there may be no ocean place and parameters selection, or a lesser selection. In this approach a plurality of ocean places are considered (for example the 27 previously considered, or even more), a plurality of ocean parameters are considered (it may be all the parameters for which a forecast is available, or a set among those parameters). Those ocean places and set of parameters constitute the input of a machine or deep learning algorithm, and the background seismic noise constitutes its output. The obtained trained algorithm constitutes the coupling function implemented in sub step A03.

The algorithm may be regularly improved as new data become available for training.

Several machine learning algorithms have been successfully implemented to quantify the dependence between sea weather data and seismic noise power in specific spectral bins.

The scope of the present invention is defined by the appended claims.

## Claims

1. Seismic noise prediction method at a point of interest, POI, comprising:

   A : Retrieving ocean weather forecast from one or a plurality of predetermined ocean place(s), POPI, said ocean weather forecast covering values of one or a plurality of predetermined ocean parameter(s), POPa,
   B : Retrieving a coupling function, CF, coupling said predetermined ocean parameter(s), POPa, taken at said

EP 4 067 943 B1

predetermined ocean place(s), POPI, with a seismic noise, SN, taken at the place of interest, POI, said coupling function being defined on at least a spectral window, $\Delta f$, of the seismic noise included in the range [0,001 Hz; 20 Hz],

**C** : Determining seismic noise predictions, SNP, based on said ocean weather forecast injected in said coupling function,

said method comprising a preliminary step A0 comprising the sub-steps of:

A01 : Retrieving ocean weather data, OWD, recorded at various places in the ocean, OPI, and during a period of time PT, said ocean weather data comprising values of a plurality of ocean parameters, OPa, including said predetermined ocean parameter(s),

A02 **:** Retrieving seismic noise data, SND, recorded at the place of interest, POI, during the same period of time PT,

A03 **:** Determining said predetermined ocean place(s), POPI, said predetermined ocean parameter(s), POPa, and said coupling function, CF, from a relationship between said ocean weather data and said seismic noise data, wherein the sub-step A03 comprises:

- identifying ocean parameter(s) or combinations of ocean parameter(s) leading to a correlation with seismic noise at the place of interest, said identified ocean parameter(s) corresponding to said predetermined ocean parameter(s), and identifying the ocean place(s) where the correlation is relevant, said identified ocean places corresponding to said predetermined ocean place(s),
- solving a multivariable regression protocol in order to determine said coupling function, CF, based on said correlations.

2. Seismic noise prediction method as claimed in claim 1 wherein the correlation is established, or not, by the calculation of a correlation factor for each ocean parameter at each ocean places.

3. Seismic noise prediction method as claimed in claim 1 wherein said combination of ocean parameter(s) leading to a correlation are determined by principal component analysis, PCA.

4. Seismic noise prediction method at a point of interest, POI, comprising:

A : Retrieving ocean weather forecast from one or a plurality of predetermined ocean place(s), POPI, said ocean weather forecast covering values of one or a plurality of predetermined ocean parameter(s), POPa,

**B :** Retrieving a coupling function, CF, coupling said predetermined ocean parameter(s), POPa, taken at said predetermined ocean place(s), POPI, with a seismic noise**,** SN, taken at the place of interest, POI, said coupling function being defined on at least a spectral window, $\Delta f$, of the seismic noise included in the range [0,001 Hz; 20 Hz],

**C :** Determining seismic noise predictions, SNP, based on said ocean weather forecast injected in said coupling function,

said method comprising a preliminary step A0 comprising the sub-steps of:

A01 **:** Retrieving ocean weather data**,** OWD, recorded at various places in the ocean, OPI, and during a period of time PT, said ocean weather data comprising values of a plurality of ocean parameters**,** OPa, including said predetermined ocean parameter(s),

A02 : Retrieving seismic noise data, SND, recorded at the place of interest**,** POI, during the same period of time PT,

A03 : Determining said predetermined ocean place(s), POPI, said predetermined ocean parameter(s)**,** POPa, and said coupling function, CF, from a relationship between said ocean weather data and said seismic noise data, wherein in sub-step A03 said predetermined ocean places**,** POPI, corresponds to the various ocean places, OPI, said predetermined ocean parameters, POP, corresponds to the plurality of ocean parameter(s), OPa, and wherein the sub-step A03 comprises performing a deep learning or machine learning algorithm, with said plurality of ocean parameters taken at said plurality of ocean places as inputs, and said seismic noise data as output.

5. Seismic noise prediction method as claimed in one of the preceding claims wherein predetermined ocean parameters comprise wave height, WH, and wave perio, T.

6. Seismic noise prediction method as claimed in one of the preceding claims wherein said plurality of ocean parameters are chosen among: wave height, wave period, wave direction, wave spread, wind force, wind direction, air temperature, water temperature, air pressure.

7. Seismic noise prediction method as claimed in one of the preceding claims wherein said predetermined ocean place(s), POPI, are situated in the water basins nearby the point of interest, POI.

8. Seismic noise prediction method as claimed on one of the preceding claims wherein the spectral window, Δf, is included in the range [0.01 Hz; 10 Hz].

**Patentansprüche**

1. Vorhersageverfahren für seismisches Rauschen an einem Punkt von Interesse, POI, Folgendes umfassend:

   A: Abrufen einer Ozeanwettervorhersage von einem oder einer Vielzahl von vorbestimmten Ozeanort(en), POPI, wobei die Ozeanwettervorhersage Werte eines vorbestimmten Ozeanparameters oder einer Vielzahl von vorbestimmten Ozeanparametern, POPa, abdeckt,
   B: Abrufen einer Kopplungsfunktion, CF, die den/die vorbestimmten Ozeanparameter, POPa, die an dem/den vorbestimmten Ozeanort(en), POPI, aufgenommen werden, mit einem seismischen Rauschen, SN, das an dem Ort von Interesse, POI, aufgenommen wird, koppelt, wobei die Kopplungsfunktion auf mindestens einem spektralen Fenster, Δf, des seismischen Rauschens definiert ist, das in dem Bereich [0,001 Hz; 20 Hz] eingeschlossen ist,
   C: Bestimmen von Vorhersagen seismischen Rauschens, SNP, auf Grundlage der in die Kopplungsfunktion injizierten Ozeanwettervorhersage, wobei das Verfahren einen vorbereitenden Schritt A0 umfasst, der die folgenden Teilschritte umfasst:

   A01: Abrufen von Ozeanwetterdaten, OWD, die an verschiedenen Orten im Ozean, OPI, und während eines Zeitraums, PT, aufgezeichnet werden, wobei die Ozeanwetterdaten Werte einer Vielzahl von Ozeanparametern, OPa, einschließlich des/der vorbestimmten Ozeanparameter(s), umfassen,
   A02: Abrufen von Daten seismischen Rauschens, SND, die an dem Ort von Interesse, POI, während desselben Zeitraums, PT aufgezeichnet werden,
   A03: Bestimmen des/der vorbestimmten Ozeanorte(s), POPI, des/der vorbestimmten Ozeanparameter(s), POPa, und der Kopplungsfunktion, CF, aus einer Beziehung zwischen den Ozeanwetterdaten und den Daten seismischen Rauschens, wobei der Teilschritt A03 Folgendes umfasst:

   - Identifizieren eines oder mehrerer Ozeanparameter oder von Kombinationen von Ozeanparametern, die zu einer Korrelation mit seismischem Rauschen an dem Ort von Interesse führen, wobei der/die identifizierte(n) Ozeanparameter dem/den vorbestimmten Ozeanparameter(n) entspricht/entsprechen, und Identifizieren des/der Ozeanorte(s), wo die Korrelation relevant ist, wobei die identifizierten Ozeanorte dem/den vorbestimmten Ozeanort(en) entsprechen,
   - Lösen eines Multivariablen-Regressionsprotokolls, um die Kopplungsfunktion, CF, auf Grundlage der Korrelationen zu bestimmen.

2. Vorhersageverfahren für seismisches Rauschen nach Anspruch 1, wobei die Korrelation durch die Berechnung eines Korrelationsfaktors für jeden Ozeanparameter an jedem Ozeanort hergestellt wird oder nicht.

3. Vorhersageverfahren für seismisches Rauschen nach Anspruch 1, wobei die Kombination von einem oder mehreren Ozeanparametern, die zu einer Korrelation führen, durch eine Hauptkomponentenanalyse, PCA, bestimmt wird.

4. Vorhersageverfahren für seismisches Rauschen an einem Punkt von Interesse, POI, Folgendes umfassend:

   A: Abrufen einer Ozeanwettervorhersage von einem oder einer Vielzahl von vorbestimmten Ozeanort(en), POPI, wobei die Ozeanwettervorhersage Werte eines vorbestimmten Ozeanparameters oder einer Vielzahl von vorbestimmten Ozeanparametern, POPa, abdeckt,
   B: Abrufen einer Kopplungsfunktion, CF, die den/die vorbestimmten Ozeanparameter, POPa, die an dem/den vorbestimmten Ozeanort(en), POPI, aufgenommen werden, mit einem seismischen Rauschen, SN, das an dem Ort von Interesse, POI, aufgenommen wird, koppelt, wobei die Kopplungsfunktion auf mindestens einem spektralen Fenster, Δf, des seismischen Rauschens definiert ist, das in dem Bereich [0,001 Hz; 20 Hz] eingeschlossen ist,

C: Bestimmen von Vorhersagen seismischen Rauschens, SNP, auf Grundlage der in die Kopplungsfunktion injizierten Ozeanwettervorhersage, wobei das Verfahren einen vorbereitenden Schritt A0 umfasst, der die folgenden Teilschritte umfasst:

A01: Abrufen von Ozeanwetterdaten, OWD, die an verschiedenen Orten im Ozean, OPI, und während eines Zeitraums, PT, aufgezeichnet werden, wobei die Ozeanwetterdaten Werte einer Vielzahl von Ozeanparametern, OPa, einschließlich des/der vorbestimmten Ozeanparameter(s), umfassen,

A02: Abrufen von Daten seismischen Rauschens, SND, die an dem Ort von Interesse, POI, während desselben Zeitraums, PT aufgezeichnet werden,

A03: Bestimmen des/der vorbestimmten Ozeanorte(s), POPI, des/der vorbestimmten Ozeanparameter(s), POPa, und der Kopplungsfunktion, CF, aus einer Beziehung zwischen den Ozeanwetterdaten und den Daten seismischen Rauschens, wobei in dem Teilschritt A03 die vorbestimmten Ozeanorte, POPI, den verschiedenen Ozeanorten, OPI entsprechen, die vorbestimmten Ozeanparameter, POP, der Vielzahl von Ozeanparametern, OPa, entsprechen, und wobei der Teilschritt A03 das Durchführen eines Algorithmus des tiefen Lernens oder Maschinenlernens umfasst, mit der Vielzahl von Ozeanparametern, die an der Vielzahl von Ozeanorten aufgenommen werden, als Eingaben und den Daten seismischen Rauschens als Ausgabe.

5. Vorhersageverfahren für seismisches Rauschen nach einem der vorhergehenden Ansprüche, wobei vorbestimmte Ozeanparameter Wellenhöhe, WH, und Wellenperiode, T, umfassen.

6. Vorhersageverfahren für seismisches Rauschen nach einem der vorhergehenden Ansprüche, wobei die Vielzahl von Ozeanparametern unter Folgendem ausgewählt ist: Wellenhöhe, Wellenperiode, Wellenrichtung, Wellenausbreitung, Windstärke, Windrichtung, Lufttemperatur, Wassertemperatur, Luftdruck.

7. Vorhersageverfahren für seismisches Rauschen nach einem der vorhergehenden Ansprüche, wobei sich der/die vorbestimmte(n) Ozeanort(e), POPI, in den Wasserkörpern nahe dem Punkt von Interesse, POI, befindet/befinden.

8. Vorhersageverfahren für seismisches Rauschen nach einem der vorhergehenden Ansprüche, wobei das Spektralfenster, Δf, in dem Bereich [0,01 Hz; 10 Hz] eingeschlossen ist.

**Revendications**

1. Procédé de prédiction de bruit sismique en un point d'intérêt, POI, comprenant :

A : la récupération de prévisions météorologiques océaniques à partir d'un ou d'une pluralité d'endroit(s) océanique(s) prédéterminé(s), POPI, lesdites prévisions météorologiques océaniques couvrant des valeurs d'un ou d'une pluralité de paramètre(s) océanique(s) prédéterminé(s), POPa ;

B : la récupération d'une fonction de couplage, CF, couplant ledit/lesdits paramètre(s) océanique(s) prédéterminé(s), POPa, pris audit/auxdits endroit(s) océanique(s) prédéterminé(s), POPI, avec un bruit sismique, SN, pris au point d'intérêt, POI, ladite fonction de couplage étant définie sur au moins une fenêtre spectrale, Δf, du bruit sismique inclus dans la plage [0,001 Hz ; 20 Hz] ;

C : la détermination de prédictions de bruit sismique, SNP, sur la base des prévisions météorologiques océaniques injectées dans ladite fonction de couplage, ledit procédé comprenant une étape préliminaire A0 comprenant les sous-étapes suivantes :

A01 : la récupération de données météorologiques océaniques, OWD, enregistrées à différents endroits dans l'océan, OPI, et au cours d'une période de temps PT, lesdites données météorologiques océaniques comprenant des valeurs d'une pluralité de paramètres océaniques, OPa, incluant ledit/lesdits paramètre(s) océanique(s) prédéterminé(s) ;

A02 : la récupération de données de bruit sismique, SND, enregistrées au lieu d'intérêt, POI, au cours de la même période de temps PT ;

A03 : la détermination dudit/desdits endroit(s) océanique(s) prédéterminé(s), POPI, dudit/desdits paramètre(s) océanique(s) prédéterminé(s), POPa, et de ladite fonction de couplage, CF, à partir d'une relation entre lesdites données météorologiques océaniques et desdites données de bruit sismique, dans lequel la sousétape A03 comprend :

- l'identification d'un ou de plusieurs paramètres océaniques ou de combinaisons d'un ou de plusieurs paramètres océaniques conduisant à une corrélation avec un bruit sismique à l'endroit d'intérêt, ledit/lesdits paramètre(s) océanique(s) identifié(s) correspondant audit/auxdits paramètre(s) océanique(s) prédéterminé(s), et l'identification du/des endroit(s) océanique(s) où la corrélation est pertinente, lesdits endroits océaniques identifiés correspondant audit/auxdits endroit(s) océanique(s) prédéterminé(s) ;
- la résolution d'un protocole de régression multi-variable pour déterminer ladite fonction de couplage, CF, sur la base desdites corrélations.

2. Procédé de prédiction de bruit sismique selon la revendication 1, dans lequel la corrélation est établie, ou non, en calculant un facteur de corrélation pour chaque paramètre océanique à chaque endroit océanique.

3. Procédé de prédiction de bruit sismique selon la revendication 1, dans lequel ladite combinaison d'un ou de plusieurs paramètres océaniques conduisant à une corrélation est déterminée par analyse de composantes principales, PCA.

4. Procédé de prédiction de bruit sismique en un point d'intérêt, POI, comprenant :

A : la récupération de prévisions météorologiques océaniques à partir d'un ou d'une pluralité d'endroit(s) océanique(s) prédéterminé(s), POPI, lesdites prévisions météorologiques océaniques couvrant des valeurs d'un ou d'une pluralité de paramètre(s) océanique(s) prédéterminé(s), POPa ;
B : la récupération d'une fonction de couplage, CF, couplant ledit/lesdits paramètre(s) océanique(s) prédéterminé (s), POPa, pris audit/auxdits endroit(s) océanique(s) prédéterminé(s), POPI, avec un bruit sismique, SN, pris au point d'intérêt, POI, ladite fonction de couplage étant définie sur au moins une fenêtre spectrale, $\Delta f$, du bruit sismique inclus dans la plage [0,001 Hz ; 20 Hz] ;
C : la détermination de prédictions de bruit sismique, SNP, sur la base desdites prévisions météorologiques océaniques injectées dans ladite fonction de couplage, ledit procédé comprenant une étape préliminaire A0 comprenant les sous-étapes suivantes :

A01 : la récupération de données météorologiques océaniques, OWD, enregistrées à différents endroits dans l'océan, OPI, et au cours d'une période de temps PT, lesdites données météorologiques océaniques comprenant des valeurs d'une pluralité de paramètres océaniques, OPa, incluant ledit/lesdits paramètre(s) océanique(s) prédéterminé(s) ;
A02 : la récupération de données de bruit sismique, SND, enregistrées à l'endroit d'intérêt, POI, au cours de la même période de temps PT ;
A03 : la détermination dudit/desdits endroit(s) océanique(s) prédéterminé(s), POPI, dudit/desdits paramètre(s) océanique(s) prédéterminé(s), POPa, et de ladite fonction de couplage, CF, à partir d'une relation entre lesdites données météorologiques océaniques et lesdites données de bruit sismique, dans lequel, dans la sous-étape A03, lesdits endroits océaniques, POPI, correspondent aux différents endroits océaniques, OPI, lesdits paramètres océaniques prédéterminés, POP, correspondent à la pluralité de paramètres océaniques, OPa, et dans lequel la sous-étape A03 comprend l'exécution d'un algorithme d'apprentissage profond ou d'apprentissage automatique, ladite pluralité de paramètres océaniques étant prise à ladite pluralité d'endroits océaniques comme entrées, et lesdites données de bruit sismique comme sortie.

5. Procédé de prédiction de bruit sismique selon l'une des revendications précédentes, dans lequel des paramètres océaniques prédéterminés comprennent la hauteur des vagues, WH, et la période des vagues, T.

6. Procédé de prédiction de bruit sismique selon l'une des revendications précédentes, dans lequel ladite pluralité de paramètres océaniques sont choisis parmi : la hauteur des vagues, la période des vagues, la direction des vagues, la propagation des vagues, la force du vent, la direction du vent, la température de l'air, la température de l'eau, la pression de l'air.

7. Procédé de prédiction de bruit sismique selon l'une des revendications précédentes, dans lequel ledit/lesdits endroit(s) océanique(s) prédéterminé(s) est/sont situé(s) près du point d'intérêt, POI.

8. Procédé de prédiction de bruit sismique selon l'une des revendications précédentes, dans lequel la fenêtre spectrale, $\Delta f$, est incluse dans la plage [0,01 Hz, 10 Hz].

Retrieving ocean weather forecast :
predetermined ocean parameter(s)POPa
from predetermined ocean place POPℓ

A

Retrieving a coupling function
coupling : POPa taken at POPℓ to
seismic noise SN taken at
a place of interest POI

B

Determining seismic noise predictions SNP
based on POPa/POPℓ injected in the coupling function

C

# FIG.1

FIG.2

FIG.3

FIG.4

FIG.5

FIG.6

FIG.7

FIG.8A

FIG.8B

FIG.9A

EP 4 067 943 B1

FIG.9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JON PETERSON**. *Observation and modeling of seismic background noise*, 1993
- **FABRICE ARDHUIN et al.** From seismic noise to ocean wave parameters: general methods and validation. *Journal of Geophysical research*, 2012, vol. 117, C05002
- **ARDHUIN et al.** Ocean wave sources of seismic noise. *Journal of Geophysical research*, January 2011, vol. 116 (C9)
- **HILLERS et al.** Global oceanic microseism sources by array and machine learning techniques: Ionian and Tyrrhenian sea case of study. *Frontiers in Earth science*, May 2020, vol. 8
- **PETERSON**. *Observation and modeling of seismic background noise*, 1993, 31, 32